# EUROPÄISCHE PATENTSCHRIFT

(11) **EP 3 837 061 B1**
(45) Veröffentlichungstag und Bekanntmachung des Hinweises auf die Patenterteilung: **12.02.2025**
(21) Anmeldenummer: 19759284.3
(22) Anmeldetag: 14.08.2019
(51) Int. Cl.: C23C 22/83, C09D 7/40, C10M 173/02, C10M 173/00, B05D 7/14, C09D 5/08

(54) **VERFAHREN ZUR HERSTELLUNG EINES PHOSPHATIERTEN, MIT EINEM KORROSIONSSCHUTZMITTEL BELEGTEN DRAHTS, INSBESONDERE EINES STAHLDRAHTS**
METHOD FOR PRODUCING A PHOSPHATED WIRE, MORE PARTICULARLY A STEEL WIRE, PROVIDED WITH AN ANTI-CORROSION AGENT
PROCÉDÉ DE FABRICATION D'UN FIL PHOSPHATÉ RECOUVERT D'UN MOYEN DE PROTECTION CONTRE LA CORROSION, EN PARTICULIER D'UN FIL D'ACIER

(30) Priorität: 17.08.2018 DE 102018120137
(43) Veröffentlichungstag der Anmeldung: 23.06.2021
(73) Patentinhaber: Saarstahl Aktiengesellschaft, 66333 Völklingen (DE)
(72) Erfinder: FRANK, Martina, 66571 Eppelborn (DE); FRANK, Patrick, 66798 Wallerfangen (DE)
(74) Vertreter: Patentanwälte Bernhardt / Wolff Partnerschaft mbB
(86) Internationale Anmeldenummer: PCT/DE2019/100730
(87) Internationale Veröffentlichungsnummer: WO 2020/035113

(56) Entgegenhaltungen:
- EP-A1- 3 305 882
- WO-A1-2009/095374
- WO-A1-88/07069

## Beschreibung

Die Erfindung betrifft ein Verfahren zur Herstellung eines phosphatierten, mit einem Korrosionsschutzmittel belegten Drahts, insbesondere Stahldrahts, bei dem das Korrosionsschutzmittel auf den zuvor phosphatierten Draht aufgebracht wird, wobei als das Korrosionsschutzmittel eine Emulsion oder/und Dispersion aufgebracht wird, die ein Tensid und als disperse Phase ein Öl enthält.

Aus der EP 3 305 882 A1 geht ein wasserhaltiges Schmier- und Beschichtungsmittel hervor, das zur plastischen Metallumformung verwendet wird und einen Wassergehalt von 3 bis 50 Gew.-% aufweist. Es enthält eine lipophile Schmiermittelkomponente und/oder ein spaltbarer Festschmierstoff, die bzw. der in Wasser dispergiert ist und eine Fettsäurekomponente aufweist.

Die WO 2009/095374 A1 beschreibt ein Verfahren zur Vorbereitung von metallischen Werkstücken zum Kaltumformen durch Aufbringen einer Schmierstoffschicht auf eine metallische Oberfläche, wobei die Schmierstoffschicht durch Kontaktieren der Oberfläche mit einer wässrigen Schmierstoffzusammensetzung ausgebildet wird, die mindestens zwei Wachse mit unterschiedlichen Eigenschaften sowie ein organisches polymeres Material enthält.

Die WO 88/07069 beschreibt eine antikorrosive lagerstabile Zusammensetzung auf Ölbasis, die emulgiert wird und zum Auftragen auf feste Metallsubstrate vorgesehen ist.

Es ist hinreichend bekannt, Metalloberflächen durch chemische Reaktion mit Phosphatlösungen mit einer Konversionsschicht aus Metallphosphat zu versehen, die als Haftgrund und Trägerschicht für Umformschmierstoffe dient. Zwar hat die Phosphatierung der Metalloberflächen selbst eine gewisse korrosionsschützende Wirkung, bei längeren Lagerungsdauern und ungünstigen Bedingungen kann es dennoch zu Korrosion kommen.

Ferner ist durch Benutzung bekannt, dass sich die Korrosionsbeständigkeit von phosphatierten Metallen durch Aufbringen einer Ölschicht ausreichend gut verbessern lässt. Dabei hat es sich als besonders vorteilhaft erwiesen, dass der Korrosionsschutz auch dann nicht verlorengeht, wenn mechanisch auf die Metalloberfläche eingewirkt wird.

Allerdings ist die Handhabung von Metallwerkstücken, deren Oberfläche mit dem Öl belegt worden ist, problematisch, u.a. weil von den Metallwerkstücken abtropfendes Öl Verschmutzungen verursacht und das Handling der Metallwerkstücke unangenehm macht.

Der Erfindung liegt die Aufgabe zugrunde, ein Verfahren der eingangs genannten Art zu schaffen, das sich besser handhaben lässt.

Erfindungsgemäß wird diese Aufgabe dadurch gelöst, dass ein Wirkanteil des Korrosionsschutzmittels, der eine disperse Phase der Emulsion oder/und Dispersion umfasst, folgende Zusammensetzung aufweist:
- Öl: 5 bis 75 Gew.-%,
- Tensid: 25 bis 95 Gew.-%.

Durch das erfindungsgemäße Verfahren wird die Möglichkeit geschaffen, eine Oberfläche eines metallischen Drahts mit einer derartig geringen Menge des Öls zu versehen, dass die Oberfläche zum Erreichen des Korrosionsschutzes vollständig mit dem Öl belegt ist, aber kein überschüssiges Öl an der Oberfläche angeordnet ist, sodass das Öl nicht von selbst von der Oberfläche abläuft.

Es wurde außerdem festgestellt, dass sich beim Ziehen von Draht, insbesondere Stahldraht, Ziehmittel besser an mit dem Korrosionsschutzmittel belegten Draht anordnet als an einem unbelegten phosphatierten Draht. Darüber hinaus bildet sich beim Ziehen nach Verlassen des Ziehsteins anders als bisher kein Staub und es blättern keine Ziehmittelreste ab. Vorteilhaft verschmutzt die Umgebung, in der der Draht gezogen wird, deshalb wesentlich weniger. Darüber hinaus lässt die besonders gleichmäßige Belegung der Drahtoberfläche, die sich mit dem Verfahren erreichen lässt, insbesondere in nachfolgenden Verarbeitungsprozessen, eine bessere Verarbeitbarkeit des Metalls zu und es kann eine einheitlichere Bauteilgeometrie erreicht werden.

Ferner hat sich überraschend gezeigt, dass zu Ringen angeordneter, phosphatierter Draht, insbesondere Stahldraht, der erfindungsgemäß mit dem Korrosionsschutzmittel belegt worden ist, wesentlich mehr zusammengepresst werden kann als nicht mit dem Korrosionsschutzmittel belegter Draht. Dies hat den Vorteil, dass sich Lager- und Transportkosten für den Draht einsparen lassen.

Ein weiterer Vorteil ist, dass das Korrosionsschutzmittel keine Schwermetalle oder sonstige gesundheitsschädliche Stoffe enthält, sodass es sich mit Hinblick auf Arbeitsschutz und Arbeitshygiene vergleichsweise einfach handhaben und umweltverträglich verladen und transportieren lässt. Es lässt sich darüber hinaus ausschließlich aus nachwachsenden Rohstoffen herstellen.

Das Verfahren eignet sich besonders gut, um den Draht für eine anschließende Umformung, insbesondere Kaltumformung, vorzubereiten. Als besonders vorteilhaft hat es sich bei der Verwendung für Stahldraht erwiesen. Mit Hinblick auf die Umformung ist ein Vorteil des Verfahrens, dass das Öl den Draht, anders als die herkömmlichen Korrosionsschutzmittel, nicht mit einer öligfettigen oder klebrigen Schicht versieht. Eine solche Schicht macht die Handhabung des belegten Drahts schwierig und aufwendig, da der Draht nicht ohne Weiteres weitergegeben werden kann und, ggf. mehrfaches, Umverpacken notwendig wird. Zweckmäßigerweise weist das Öl eine Viskosität von 200 bis 800 mPa*s, vorzugsweise von 300 bis 700 mPa*s, auf. Vorzugsweise ist das Öl ein mineralisches Öl, das besonders bevorzugt neutral reagiert. Als besonders gut geeignet zur Herstellung des Korrosionsschutzmittels hat sich, vorzugsweise gereinigtes, paraffinisches Öl oder Rapsöl erwiesen.

Das Korrosionsschutzmittel kann ein Wachs enthalten. Das Wachs ist zweckmäßigerweise eine mineralische, synthetisch hergestellte oder natürlich vorkommende organische Verbindung mit Schmelzpunkt ≥ 40 °C, die in flüssigem Aggregatszustand, insbesondere im geschmolzenem Zustand, Eigenschaften eines Öls aufweist und vorzugsweise im geschmolzenem Zustand mit einem natürlichen oder einem mineralischen Öl, z.B. Rapsöl oder Paraffinöl, mischbar ist.

In einer Ausführungsform der Erfindung erfüllt das Wachs zumindest eine der nachfolgend genannten Voraussetzungen:
a) In Abhängigkeit des Mischungsverhältnisses erfolgt nach dem Erstarren einer bei einer Temperatur ≥ 40 °C hergestellten Mischung eines oder mehrerer Wachse mit einem natürlichen oder mineralischen Öl eine Thixotropierung bis zur vollständigen Immobilisierung des Öls.
b) Das Wachs wirkt selbsttätig hydrophob, insbesondere wenn es nicht mit dem Öl vermischt ist und wenn es als Beschichtung auf einer Metalloberfläche vorliegt.

In einer Ausgestaltung der Erfindung ist das Wachs
a) ein mineralisches Wachs, vorzugsweise Montanwachs oder Ozokerit (Ceresin),
b) ein Mineralölwachs, ein synthetisches oder teilweise synthetisches Wachs, vorzugsweise ein Polyalkylenwachs, z. B. Polyethylenwachs, Propylenwachs, (iso)Butylenwachs und/oder deren Oxidate, paraffinisches Wachs (Paraffine) als langkettige aliphatische Verbindung oder/und ein Fischer-Tropsch-Wachs,
c) ein natürliches Wachs, vorzugsweise Bienenwachs, Carnaubawachs, ein langkettiger, im Wesentlichen aliphatische Alkohol oder eine Fettsäure mit mindestens 16 Kohlenstoffeinheiten (z.B. Cetyl- oder Stearylalkohol) oder deren Mischungen (z. B. Cetylstearylalkohol), oder/und ein aus diesen hergestellter Ester (z. B. Cetylstearat) oder deren Amide als sogenannte Amidwachse (z. B. Distearylethylendiamid) oder
d) eine Mischung zumindest zweier der vorgenannten Wachse.

In einer Ausführungsform der Erfindung enthält oder ist eine kontinuierliche Phase der Emulsion oder/und Dispersion Wasser, vorzugsweise entionisiertes oder destilliertes Wasser. Alternativ könnte zur Bildung der kontinuierlichen Phase ein weiterer Stoff benutzt werden, der zur Bildung einer Lösung, einer Emulsion oder/und Dispersion mit dem Öl oder mit dem Öl und Wachs geeignet ist, beispielsweise Testbenzin.

In einer Ausgestaltung der Erfindung umfasst oder ist das Tensid eine wasserlösliche Seife, vorzugsweise ein Alkalisalz einer Carbonsäure. Die Carbonsäure ist bevorzugt einwertig, zweiwertig oder mehrwertig. In einer bevorzugten Ausführungsform der Erfindung ist die Carbonsäure eine Fettsäure. Die Carbonsäure weist zweckmäßigerweise eine Kettenlänge von zumindest 10 Kohlenstoffatomen auf (C10).

Besonders geeignet sind beispielsweise Salze der Palmitinsäure (Hexadecansäure, C16), der Stearinsäure (Octadecansäure, C18) oder der Sebacinsäure (Dekandisäure, C10). Diese sind kostengünstig erhältlich. Vorstellbar wäre aber auch die Verwendung oder Beimischung ungesättigter Carbonsäuren, vorzugsweise Fettsäuren, die ebenfalls eine Kettenlänge von zumindest 10 Kohlenstoffatomen aufweisen, wie beispielsweise der Ölsäure (Octadec-9-ensäure, C18) oder der Linolsäure (Octadeca-9,12-diensäure, C18).

In einer Ausführungsform der Erfindung beträgt das Massenverhältnis des Öls zu dem Tensid 0,7:1 bis 1,3:1, vorzugsweise 0,8:1 bis 1,2:1.

Da das Korrosionsschutzmittel verhältnismäßig große Anteile an dem Tensid enthält und deshalb dazu neigt, beispielsweise bei Kontakt mit Wasser, wieder zu emulgieren, hat es sich zur Vermeidung einer Reemulgierung des Korrosionsschutzmittels als vorteilhaft erwiesen, noch verbleibende überschüssige tensidische Anteile aus dem Korrosionsschutzmittel herauszulösen, wenn es die metallische Oberfläche belegt.

Deshalb ist das Tensid in einer besonders bevorzugten Ausführungsform der Erfindung vorgesehen derart, dass es sich bei Anwendung des Korrosionsschutzmittels an der phosphatierten Metalloberfläche und anschließender Trocknung vollständig zersetzt.

Insbesondere wenn auf die metallische Oberfläche eine Zinkphosphatschicht aufgebracht ist, wird das Tensid des Korrosionsschutzmittels teilweise durch Zink der Zinkphosphatschicht zersetzt. Bei Verwendung eines Alkalistearats entsteht Zinkstearat, das vorteilhaft nicht nur wasserunlöslich ist und hydrophobe Eigenschaften hat, sondern darüber hinaus bei der Kaltumformung als Ziehseife benutzt wird und sich folglich auch bei einer späteren Kaltumformung vorteilhaft auswirken kann. Wird der Draht mit einer calciumhaltigen Phosphatschicht versehen, entsteht in analoger Weise Calciumstearat, das ebenfalls als Ziehseife verwendet oder auch bei der Kaltumformung als Schmierstoff eingesetzt wird.

Zweckmäßigerweise weist das Tensid Ammoniak oder/ und dazu ein, vorzugsweise flüchtiges, Amin auf. Vorzugsweise ist das Amin zumindest ein kurzkettiges Alkyl- oder Alkanol-Derivat des Ammoniaks mit höchstens 3 linearen Kohlenstoffeinheiten (≤ C3), die mit gesättigten und/oder ungesättigten Fettsäuren mit Kettenlängen ≥ C10 oder/und, insbesondere zweiwertigen, Carbonsäuren (≥ C10) in Wasser und Öl lösliche Seifen bilden. Ein Beispiel für eine solche Seife ist Ammoniumstearat, das sich aus Ammoniak und Stearinsäure bildet.

In einer besonders bevorzugten Ausführungsform der Erfindung weist das Tensid Monoethanolamin, Diethanolamin, Triethanolamin oder/und Isopropanolamin auf. Vorteilhaft weist das Tensid, das das Monoethanolamin, das Triethanolamin und/oder das Isopropanolamin aufweist, nicht nur tensidische Eigenschaften auf, die mit denjenigen der Alkaliseifen vergleichbar sind, sondern zersetzt sich darüber hinaus schon bei Raumtemperatur und besonders gut bei typischen Trocknungstemperaturen größer 50 °C. Wenn sich beispielsweise das Tensid, das das Monoethanolamin, das Triethanolamin und/oder das Isopropanolamin aufweist, zersetzt hat, bleiben auf der Metalloberfläche lediglich das Öl, die Fettsäure und das bereits bei Aufbringung des Korrosionsschutzmittels auf die Metalloberfläche entstandene Zinkstearat zurück, die jeweils nicht nur korrosionsschützend wirken, sondern darüber hinaus auch hydrophob sind. Entsprechendes gilt für das genannte Calciumstearat.

Als besonders gut geeignet erwiesen hat sich die Verwendung des Monoethanolamins aufgrund seiner hohen Basizität (pK_{B} = 4,5), seiner guten Löslichkeit in Wasser und in Öl und der vergleichsweise guten thermischen Zersetzbarkeit seiner Seifen.

Das Korrosionsschutzmittel umfasst neben einer kontinuierlichen Phase der Emulsion oder/und Dispersion einen Wirkanteil, der die disperse Phase umfasst.

Der Wirkanteil weist zweckmäßigerweise 5 bis 75 Gew.-%, vorzugsweise 50 bis 75 Gew.-%, besonders bevorzugt 60 bis 70 Gew.-% Öl, vorzugsweise gereinigtes Paraffinöl oder Rapsöl, auf.

Das Tensid liegt im Wirkanteil mit 25 bis 95 Gew.-%, vorzugsweise 25 bis 50 Gew.-%, besonders bevorzugt 30 bis 50 Gew.-%, vor. Als besonders vorteilhaft hat es sich erwiesen, das Tensid mit 30 bis 40 Gew-% bezogen auf den Wirkanteil vorzusehen.

In einer Ausgestaltung der Erfindung enthält der Wirkanteil die Palmitinsäure oder/und die Stearinsäure in 15 bis 65 Gew.-%, vorzugsweise 20 bis 40 Gew.-%, besonders bevorzugt 25 bis 35 Gew.-%, bezogen auf den Wirkanteil.

Es hat sich als zweckmäßig erwiesen, das Amin, vorzugsweise Monoethanolamin, Isopropanolamin oder Triethanolamin, mit mindestens 3 %, vorzugsweise mindestens 4,5 Gew.-%, bezogen auf den Wirkanteil vorzusehen. In einer Ausführungsform der Erfindung ist das Amin bezogen auf den Wirkanteil mit höchstens 30 Gew.-%, vorzugsweise höchstens 20 Gew.-%, vorgesehen. In einer bevorzugten Ausführungsform der Erfindung ist das Amin mit höchstens 12 Gew.-%, besonders bevorzugt 10 Gew.-%, vorgesehen.

Zweckmäßigerweise liegt der Wirkanteil in dem Korrosionsschutzmittel in einer Konzentration von mindestens 0,25 Gew.-%, vorzugsweise mindestens 0,5 Gew.-%, besonders bevorzugt mindestens 0,8 Gew.-% vor, wobei der Rest durch die kontinuierliche Phase der Emulsion oder/und Dispersion gebildet ist. Die kontinuierliche Phase kann bspw. durch Wasser oder Testbenzin gebildet sind. Besonders gute Ergebnisse lassen sich erzielen, wenn der Wirkanteil zumindest 1 Gew.-% beträgt. In einer Ausführungsform der Erfindung liegt der Wirkanteil in dem Korrosionsschutzmittel in einer Konzentration von höchstens 5 Gew.-%, vorzugsweise höchstens 3 Gew.-%, besonders bevorzugt höchstens 2,5 Gew.-%, vor. Es hat sich als besonders vorteilhaft zur Handhabung des Korrosionsschutzmittels erwiesen, den Wirkanteil in dem Korrosionsschutzmittel in einer Konzentration zwischen 1 Gew.-% und 1,8 Gew.-% vorzusehen.

Vorteilhaft wird bei Konzentrationen innerhalb der letztgenannten Werte vermieden, dass der Draht ölig aussieht und bei Berührung Öl abgibt, und gleichzeitig ein ausreichend guter Korrosionsschutz erreicht.

Das Korrosionsschutzmittel weist zweckmäßigerweise 0,0125 bis 3,75 Gew.-%, vorzugsweise 0,125 bis 3,75 Gew.-%, besonders bevorzugt 0,15 bis 3,5 Gew.-%, Öl, vorzugsweise gereinigtes Paraffinöl oder Rapsöl, auf.

Das Tensid liegt in einer Ausführungsform der Erfindung im Korrosionsschutzmittel mit 0,0625 bis 4,75 Gew.-%, vorzugsweise 0,0625 bis 2,5 Gew.-%, besonders bevorzugt 0,075 bis 2,5 Gew.-%, vor. Als besonders vorteilhaft hat es sich erwiesen, das Tensid in dem Korrosionsschutzmittel mit 0,075 bis 2 Gew.-% vorzusehen.

In einer Ausgestaltung der Erfindung enthält das Korrosionsschutzmittel die Palmitinsäure oder/und die Stearinsäure in 0,0375 bis 3,25 Gew.-%, vorzugsweise 0,05 bis 2 Gew.-%, besonders bevorzugt 0,0625 bis 1,75 Gew.-%.

Es hat sich als zweckmäßig erwiesen, das Amin, vorzugsweise Monoethanolamin, Isopropanolamin oder Triethanolamin, mit mindestens 0,0075 Gew.-%, vorzugsweise mindestens 0,01125 Gew.-%, vorzusehen. Es hat sich als besonders vorteilhaft erwiesen, dass Amin in dem Korrosionsschutzmittel mit höchstens 1,5 Gew.-%, vorzugsweise höchstens 1 Gew.-%, vorzusehen. In einer bevorzugten Ausführungsform der Erfindung ist das Amin mit höchstens 0,6 Gew.-%, besonders bevorzugt 0,5 Gew.-%, vorgesehen.

In einer bevorzugten Ausgestaltung der Erfindung ist die Gesamtzusammensetzung des Korrosionsschutzmittels wie folgt:
- Kontinuierliche Phase, vorzugsweise Wasser oder/und Testbenzin: 97 bis 99,5 Gew.-%, vorzugsweise 98,5 bis 99 Gew.-%,
- Öl, vorzugsweise gereinigtes Paraffinöl oder Rapsöl: 0,375 bis 2,25 Gew.-%, vorzugsweise 0,5 bis 1,125 Gew.-%, besonders bevorzugt 0,6 bis 1,0 Gew.-%,
- Tensid: 0,125 bis 1,5 Gew.-%, vorzugsweise 0,25 bis 0,75 Gew.-%, besonders bevorzugt 0,3 bis 0,65 Gew.-%,
- wobei die nachfolgend genannten Bestandteile des Tensids vorzugsweise in folgenden Anteilen vorliegen:
   o Palmitinsäure oder Stearinsäure: 0,1 bis 1,2 Gew.-% vorzugsweise 0,2 bis 0,6 Gew.-%, besonders bevorzugt 0,24 bis 0,52 Gew.-%,
   ∘ Amin, vorzugsweise Monoethanolamin, Isopropanolamin oder Triethanolamin: 0,0075 bis 1,5 Gew.-%, besonders bevorzugt 0,025 bis 0,03 Gew.-%, insbesondere 0,06 bis 0,08 Gew.-%

In einer Ausgestaltung der Erfindung wird das Korrosionsschutzmittel vor Aufbringung auf den Draht konfektioniert derart, dass zumindest das Öl, das Tensid und die kontinuierliche Phase getrennt voneinander aufbewahrt sind. Vor Aufbringung des Korrosionsschutzmittels wird zunächst das Tensid in dem Öl gelöst und die gebildete Lösung anschließend in der kontinuierlichen Phase emulgiert oder/und dispergiert. Durch Vermischung des so gebildeten Wirkanteils mit der kontinuierlichen Phase, vorzugsweise dem Wasser, ist das Korrosionsschutzmittel bereit zur Anwendung, wobei optional durch zusätzlich Zugabe des Amins der pH-Wert auf 8 bis 11, vorzugsweise auf 8,4 bis 10,5, besonders bevorzugt auf 8,7 bis 9,5 eingestellt wird. Die Menge an zusätzlich zuzugebendem Amin hängt insbesondere von der Härte des Wassers, d.h. der Summe der Konzentrationen der Kationen von Erdalkalimetallen im Wasser, das die kontinuierliche Phase bildet, ab.

In einer Ausführungsform der Erfindung wird der Draht in ein Bad des Korrosionsschutzmittels getaucht. Alternativ oder ergänzend dazu kann der Draht mit dem Korrosionsschutzmittel besprüht oder benebelt werden.

Anschließend wird der Draht aus dem Bad genommen bzw. das Korrosionsschutzmittel nach dem Besprühen oder Benebeln abtropfen gelassen. Zweckmäßigerweise wird der Draht anschließend getrocknet, vorzugsweise bei einer Trocknungstemperatur größer 50 °C, besonders bevorzugt größer 110 °C, wobei verbleibende Reste des Tensids thermisch zersetzt werden. Vorteilhaft enthält ein Korrosionsschutzmittelfilm, der nach der Trocknung auf dem Draht verbleibt, das Öl und die aus der thermischen Zersetzung des Emulgators verbleibende Carbonsäure, vorzugsweise eine Fettsäure. Die Fettsäure hat vorzugsweise eine Kettenlänge ≥ C10 und ist beispielsweise Stearinsäure oder Palmitinsäure. Die Carbonsäure hat eine hydrophobe Wirkung und ist vorzugsweise im Öl gelöst. Da der Korrosionsschutzmittelfilm nach dem Trocknen nahezu keine Rückstände des Tensids mehr enthält, kann der Korrosionsschutzmittelfilm nicht mehr reemulgieren und ist dadurch gegen Ablösung vom Draht geschützt.

In einer Ausgestaltung der Erfindung ist nach Trocknung der genannte Film auf dem Draht mit 0,1 bis 1,5 g/m² Oberfläche, vorzugsweise mindestens 0,2 bis 0,8 g/m² Oberfläche, gebildet. Vorteilhaft nimmt die phosphatierte Oberfläche das Korrosionsschutzmittel dann vollständig auf und sieht deshalb nicht ölig glänzend aus und gibt das Korrosionsschutzmittel nicht ohne Weiteres ab, ist aber ausreichend gegen Korrosion geschützt. Darüber hinaus ist der an sich sehr dünne Korrosionsschutzfilm dadurch, dass er innerhalb der Phosphatschicht angeordnet ist, durch die ihn umgebende Phosphatschicht gut gegen Abrieb geschützt.

In einer Weiterbildung der Erfindung wird der Draht nach seiner Belegung mit dem Korrosionsschutzmittel, vorzugsweise mittels Kaltumformung, umgeformt.

Die Erfindung wird nachfolgend anhand von Ausführungsbeispielen und den beigefügten Zeichnungen, die sich auf die Ausführungsbeispiele beziehen, näher erläutert. Es zeigen:
- Fig. 1: eine phosphatierte Metalloberfläche im Querschnitt,
- Fig. 2: die phosphatierte Metalloberfläche nach Fig. 1 im Querschnitt nach Aufbringung des erfindungsgemäßen Korrosionsschutzmittels im Zustand vor einer Trocknung, und
- Fig. 3: die phosphatierte Metalloberfläche nach den Fig. 1 und 2 im Querschnitt nach Aufbringung des erfindungsgemäßen Korrosionsschutzmittels und anschließender Trocknung.

### 1. Beispiel:

Es wird ein erfindungsgemäßes flüssiges Korrosionsschutzmittel folgender Zusammensetzung in Gew.-% gebildet:

| | |
|---|---|
| Destilliertes Wasser: | 98,5 |
| Paraffinöl: | 1,125 |
| Stearinsäure: | 0,3 |
| Monoethanolamin: | 0,075 |

Das Korrosionsschutzmittel wird in eine Wanne gefüllt, die sich zur Aufnahme eines Rings aus in Ringform gewundenem phosphatiertem Stahldraht eignet. Ein solcher Ring wird in das Korrosionsschutzmittel getaucht und anschließend wieder entnommen und überschüssiges Korrosionsschutzmittel abtropfen gelassen.

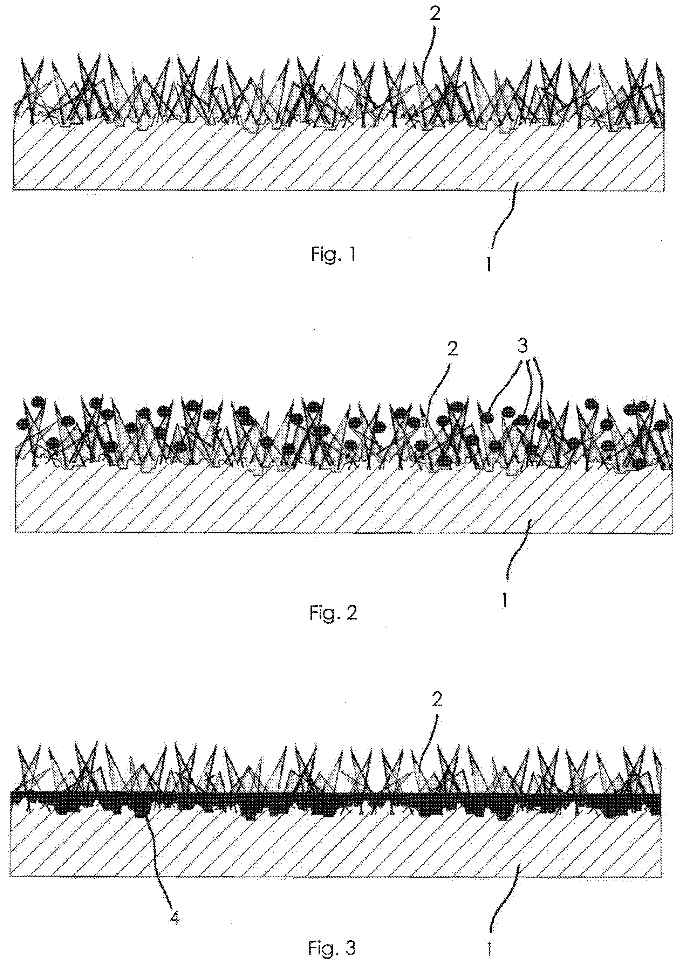

Fig. 1 zeigt im Querschnitt einen Stahldraht 1 und eine darauf angeordnete Phosphatschicht 2 im Zustand vor der Belegung mit dem Korrosionsschutzmittel.

Wie Fig. 2 zu entnehmen ist, verbleiben unmittelbar nach der Entnahme des Rings aus dem Bad auf der Phosphatschicht bzw. der Metalloberfläche Paraffinöltröpfchen 3. Dabei bildet sich aus der Stearinsäure unter Reaktion mit Zink, das in der Phosphatschicht vorliegt, Zinkstearat.

Anschließend wird der Stahldraht bei 110 °C getrocknet, wobei ein Tensid, das sich aus der Stearinsäure und dem Monoethanolamin gebildet hat, zersetzt wird und auf dem Stahldraht das Paraffinöl und das Zinkstearat verbleibt. Fig. 3 zeigt, dass sich dabei auf der Metalloberfläche eine kontinuierliche Schicht 4 bildet.

Die Schicht 4 ist hydrophob, bleibt stabil auf dem Stahldraht angeordnet und reemuligert nicht, wenn sie mit Wasser belegt wird. Sie schützt den Stahldraht aufgrund der kontinuierlichen Belegung der Stahldrahtoberfläche gegen Korrosion.

### 2. Beispiel:

Ein phosphatierter Stahldraht wird mit einem Korrosionsschutzmittel gemäß der Zusammensetzung nach dem 1. Beispiel derart besprüht, dass seine gesamte Oberfläche mit dem Korrosionsschutzmittel belegt wird. Nach dem Besprühen wird überschüssiges Korrosionsschutzmittel abtropfen gelassen und der Stahldraht anschließend behandelt wie oben beschrieben. Auch bei dieser Verfahrensweise verbleibt auf der Stahldrahtoberfläche eine hydrophobe Schicht aus dem Paraffinöl und Zinkstearat, die den Stahldraht gegen Korrosion schützt.

### 3. Beispiel:

Es wird ein erfindungsgemäßes flüssiges Korrosionsschutzmittel folgender Zusammensetzung in Gew.-% gebildet:

| | |
|---|---|
| Destilliertes Wasser: | 98,5 |
| Rapsöl: | 0,5 |
| Stearinsäure: | 0,2 |
| Sebacinsäure: | 0,2 |
| Monoethanolamin: | 0,3 |
| Triethanolamin: | 0,3 |

Ein phosphatierter Stahldraht wird wie oben anhand von Beispiel 1 beschrieben durch Tauchen mit dem Korrosionsschutzmittel belegt und anschließend getrocknet, Alternativ kann der der Stahldraht wie in Beispiel 3 beschrieben auch mit dem Korrosionsschutzmittel besprüht und anschließend getrocknet werden. Bei dieser Verfahrensweise verbleibt auf der Stahldrahtoberfläche eine hydrophobe Schicht aus dem Rapsöl einerseits und Zinkstearat oder/und Zinksebacat andererseits, die den Stahldraht gegen Korrosion schützt. Das Korrosionsschutzmittel lässt sich folglich aus rein pflanzlichen Rohstoffen und damit besonders nachhaltig herstellen.

### 4. Beispiel:

Es wird ein erfindungsgemäßes flüssiges Korrosionsschutzmittel folgender Zusammensetzung in Gew.-% gebildet:

| | |
|---|---|
| Destilliertes Wasser: | 97 |
| Paraffinöl: | 1 |
| Montanwachs: | 1 |
| Stearinsäure: | 0,8 |
| Isopropanolamin: | 0,2 |

Das Korrosionsschutzmittel wird in eine Wanne gefüllt, die sich zur Aufnahme eines Rings aus mehrfach in die Ringform gewundenem phosphatiertem Stahldraht eignet, und auf 65 °C erwärmt. Ein phosphatierter Stahldraht wird wie oben anhand von Beispiel 1 beschrieben durch Tauchen mit dem Korrosionsschutzmittel belegt und anschließend getrocknet.

Alternativ kann der der Stahldraht wie in Beispiel 3 beschrieben auch mit dem Korrosionsschutzmittel besprüht und anschließend getrocknet werden.

Bei dieser Verfahrensweise verbleibt auf der Stahldrahtoberfläche eine hydrophobe Schicht aus dem Paraffinöl, dem Montanwachs und Zinkstearat, die den Stahldraht gegen Korrosion schützt.

## Patentansprüche

1. Verfahren zur Herstellung eines phosphatierten, mit einem Korrosionsschutzmittel belegten Drahts, insbesondere Stahldrahts, bei dem das Korrosionsschutzmittel auf den zuvor phosphatierten Draht aufgebracht wird, wobei als das Korrosionsschutzmittel eine Emulsion oder/und Dispersion aufgebracht wird, die ein Tensid und als disperse Phase ein Öl enthält,
**dadurch gekennzeichnet,**
**dass** ein Wirkanteil des Korrosionsschutzmittels, der eine disperse Phase der Emulsion oder/und Dispersion umfasst, folgende Zusammensetzung aufweist:
- Öl: 5 bis 75 Gew.-%,
- Tensid: 25 bis 95 Gew.-%.

2. Verfahren nach Anspruch 1,
**dadurch gekennzeichnet,**
**dass** als das Öl ein, vorzugsweise gereinigtes, paraffinisches Öl oder Rapsöl aufgebracht wird.

3. Verfahren nach Anspruch 1 oder 2,
**dadurch gekennzeichnet,**
**dass** als das Tensid eine wasserlösliche Seife verwendet wird, vorzugsweise zumindest ein Salz einer Carbonsäure, vorzugsweise einer Fettsäure, die eine Kettenlänge von zumindest 10 Kohlenstoffatomen aufweist.

4. Verfahren nach einem der Ansprüche 1 bis 3,
**dadurch gekennzeichnet,**
**dass** das Tensid ein Salz der Stearinsäure oder/und der Palmitinsäure aufweist.

5. Verfahren nach einem der Ansprüche 1 bis 4,
**dadurch gekennzeichnet,**
**dass** das Tensid vorgesehen ist derart, dass es sich bei Anwendung des Korrosionsschutzmittels an der phosphatierten metallischen Oberfläche und anschließender Trocknung, vorzugsweise nahezu vollständig, zersetzt.

6. Verfahren nach einem der Ansprüche 1 bis 5,
**dadurch gekennzeichnet,**
**dass** das Tensid ein Amin, vorzugsweise Monoethanolamin, Isopropanolamin oder/und Triethanolamin, aufweist.

7. Verfahren nach Anspruch 5 oder 6,
**dadurch gekennzeichnet,**
**dass** der Wirkanteil des Korrosionsschutzmittels folgende Zusammensetzung aufweist:
- Öl, vorzugsweise gereinigtes Paraffinöl oder Rapsöl: 50 bis 75 Gew.%, vorzugsweise 60 bis 70 Gew.-%
- Tensid: 25 bis 50 Gew.-%
- wobei die Bestandteile des Tensids bezogen auf den Wirkanteil vorzugsweise folgende Zusammensetzung aufweisen:
o Palmitinsäure oder/und Stearinsäure: 15 bis 65 Gew.-%, vorzugsweise 20 bis 40 Gew.-%, und
o Amin, vorzugsweise Monoethanolamin, Isopropanolamin oder/und Triethanolamin: mindestens 3 Gew.-%, vorzugsweise mindestens 4,5 Gew.-%, und/oder höchstens 30 Gew.-%, vorzugsweise höchstens 20 Gew.-%

8. Verfahren nach Anspruch 7,
**dadurch gekennzeichnet,**
**dass** der Wirkanteil des Korrosionsschutzmittels zur Bildung einer Korrosionsschutzflüssigkeit mit der kontinuierlichen Phase vermischt wird, wobei die Korrosionsschutzflüssigkeit vorzugsweise 0,25 bis 5 Gew.-%, besonders bevorzugt 0,5 bis 3 Gew.-%, des Wirkanteils aufweist, und der Rest durch die kontinuierliche Phase gebildet ist.

9. Verfahren nach einem der Ansprüche 1 bis 8,
**dadurch gekennzeichnet,**
**dass** das Korrosionsschutzmittel zusammengesetzt ist wie folgt:
- Kontinuierliche Phase, vorzugsweise Wasser oder Testbenzin: 95 bis 99,75 Gew.-%, vorzugsweise 97 bis 99,5 Gew.-%,
- Öl, vorzugsweise gereinigtes Paraffinöl oder Rapsöl: 0,0125 bis 3,75 Gew.-%, vorzugsweise 0,125 bis 3,75 Gew.-%, besonders bevorzugt 0,15 bis 3,5 Gew.-%,
- Tensid: 0,0625 bis 4,75 Gew.-%, vorzugsweise 0,0625 bis 2,5 Gew.-%, besonders bevorzugt 0,075 bis 2 Gew.-%,
- wobei die nachfolgend genannten Bestandteile des Tensids vorzugsweise in folgenden Anteilen vorliegen:
o Palmitinsäure oder Stearinsäure: 0,0375 bis 3,25 Gew.-% vorzugsweise 0,05 bis 2 Gew.-%, besonders bevorzugt 0,625 bis 2 Gew.-%,
o Amin, vorzugsweise Monoethanolamin, Isopropanolamin oder/und Triethanolamin: mindestens 0,0075 Gew.-%, vorzugsweise mindestens 0,01125 Gew.-%, und/oder höchstens 1,5 Gew.-%, vorzugsweise höchstens 1 Gew.-%

10. Verfahren nach einem der Ansprüche 1 bis 9,
**dadurch gekennzeichnet,**
**dass** das Korrosionsschutzmittel, insbesondere die Korrosionsschutzflüssigkeit, auf die Oberfläche des Drahts aufgebracht wird, vorzugsweise durch Tauchen des Drahts in die Korrosionsschutzflüssigkeit oder Besprühen oder Benebeln des Drahts mit der Korrosionsschutzflüssigkeit.

11. Verfahren nach einem der Ansprüche 1 bis 10,
**dadurch gekennzeichnet,**
**dass** der Draht nach seiner Belegung mit dem Korrosionsschutzmittel, vorzugsweise mittels Kaltumformung, umgeformt wird.

12. Verfahren nach einem der Ansprüche 1 bis 11,
**dadurch gekennzeichnet,**
**dass** das Korrosionsschutzmittel Wachs enthält.

13. Phosphatierter Draht, insbesondere Stahldraht, dessen Oberfläche mit einem Korrosionsschutzmittel belegt ist, das ein Öl aufweist, wobei dass auf der Oberfläche des Drahts ein Film aus dem Korrosionsschutzmittel angeordnet ist, der das Öl und darüber hinaus zumindest eine Carbonsäure enthält, wobei das Korrosionsschutzmittel eine Emulsion oder/und Dispersion ist, die ein Tensid und als disperse Phase ein Öl enthält,
**dadurch gekennzeichnet,**
**dass** ein Wirkanteil des Korrosionsschutzmittels, der eine disperse Phase der Emulsion oder/und Dispersion umfasst, folgende Zusammensetzung aufweist:
- Öl: 5 bis 75 Gew.-%,
- Tensid: 25 bis 95 Gew.-%.

14. Draht nach Anspruch 13,
**dadurch gekennzeichnet,**
**dass** der Film Zinkstearat und/oder Calciumstearat aufweist.

15. Draht nach Anspruch 13 oder 14,
**dadurch gekennzeichnet,**
**dass** der Film den Draht mit 0,1 bis 1,5 g/m² Oberfläche, vorzugsweise mindestens 0,2 bis 0,8 g/m² Oberfläche, belegt.

## Claims

1. Process for producing a phosphated wire, in particular steel wire, coated with a corrosion inhibitor, in which the corrosion inhibitor is applied to the previously phosphated wire, where the corrosion inhibitor applied is an emulsion or/and dispersion comprising a surfactant and, as disperse phase, an oil,
**characterized in that**
an active component of the corrosion inhibitor comprising a disperse phase of the emulsion or/and dispersion has the following composition:
- oil: 5% to 75% by weight,
- surfactant: 25% to 95% by weight.

2. Process according to Claim 1,
**characterized in that**
the oil applied is a paraffinic oil or rapeseed oil, preferably cleaned.

3. Process according to Claim 1 or 2,
**characterized in that**
the surfactant used is a water-soluble soap, preferably at least one salt of a carboxylic acid, preferably of a fatty acid, having a chain length of at least 10 carbon atoms.

4. Process according to any of Claims 1 to 3,
**characterized in that**
the surfactant includes a salt of stearic acid or/and of palmitic acid.

5. Process according to any of Claims 1 to 4,
**characterized in that**
the surfactant is provided such that it breaks down, preferably almost completely, on application of the corrosion inhibitor on the phosphated metallic surface and subsequent drying.

6. Process according to any of Claims 1 to 5,
**characterized in that**
the surfactant comprises an amine, preferably monoethanolamine, isopropanolamine or/and triethanolamine.

7. Process according to Claim 5 or 6,
**characterized in that**
the active component of the corrosion inhibitor has the following composition:
- oil, preferably cleaned paraffin oil or rapeseed oil: 50% to 75% by weight, preferably 60% to 70% by weight
- surfactant: 25% to 50% by weight
- where the constituents of the surfactant, based on the active component, preferably have the following composition:
o palmitic acid or/and stearic acid: 15% to 65% by weight, preferably 20% to 40% by weight, and
o amine, preferably monoethanolamine, isopropanolamine or/and triethanolamine: at least 3% by weight, preferably at least 4.5% by weight, and/or at most 30% by weight, preferably at most 20% by weight.

8. Process according to Claim 7,
**characterized in that**
the active component of the corrosion inhibitor is mixed with the continuous phase to form a corrosion inhibitor liquid, where the corrosion inhibitor liquid preferably includes 0.25% to 5% by weight, more preferably 0.5% to 3% by weight, of the active component, and the remainder is formed by the continuous phase.

9. Process according to any of Claims 1 to 8,
**characterized in that**
the corrosion inhibitor has the following composition:
- continuous phase, preferably water or white spirit: 95% to 99.75% by weight, preferably 97% to 99.5% by weight,
- oil, preferably cleaned paraffin oil or rapeseed oil: 0.0125% to 3.75% by weight, preferably 0.125% to 3.75% by weight, more preferably 0.15% to 3.5% by weight,
- surfactant: 0.0625% to 4.75% by weight, preferably 0.0625% to 2.5% by weight, more preferably 0.075% to 2% by weight,
- where the constituents of the surfactant specified below are preferably present in the following proportions:
o palmitic acid or stearic acid: 0.0375% to 3.25% by weight, preferably 0.05% to 2% by weight, more preferably 0.625% to 2% by weight,
o amine, preferably monoethanolamine, isopropanolamine or/and triethanolamine: at least 0.0075% by weight, preferably at least 0.01125% by weight, and/or at most 1.5% by weight, preferably at most 1% by weight.

10. Process according to any of Claims 1 to 9,
**characterized in that**
the corrosion inhibitor, especially the corrosion inhibitor liquid, is applied to the surface of the wire, preferably by dipping the wire into the corrosion inhibitor liquid or by contacting the wire with a spray or mist of the corrosion inhibitor liquid.

11. Process according to any of Claims 1 to 10,
**characterized in that**
the wire, after being coated with the corrosion inhibitor, is shaped, preferably by cold forming.

12. Process according to any of Claims 1 to 11,
**characterized in that**
the corrosion inhibitor comprises wax.

13. Phosphated wire, in particular steel wire, the surface of which has been coated with a corrosion inhibitor comprising an oil,
where there is a film of the corrosion inhibitor comprising the oil and additionally at least one carboxylic acid on the surface of the wire, where the corrosion inhibitor is an emulsion or/and dispersion comprising a surfactant and, as disperse phase, an oil, **characterized in that**
an active component of the corrosion inhibitor comprising a disperse phase of the emulsion or/and dispersion has the following composition:
- oil: 5% to 75% by weight,
- surfactant: 25% to 95% by weight.

14. Wire according to Claim 13,
**characterized in that**
the film comprises zinc stearate and/or calcium stearate.

15. Wire according to Claim 13 or 14,
**characterized in that**
the film coverage of the wire is 0.1 to 1.5 g/m² of surface area, preferably at least 0.2 to 0.8 g/m² of surface area.

## Revendications

1. Procédé de fabrication d'un fil, en particulier d'un fil d'acier, phosphaté et recouvert d'un agent anticorrosion, dans lequel l'agent anticorrosion est appliqué sur le fil préalablement phosphaté, une émulsion ou/et une dispersion étant appliquée en tant qu'agent anticorrosion, laquelle contient un agent tensioactif et une huile en tant que phase dispersée,
**caractérisé en ce que**
une part active de l'agent anticorrosion, qui contient une phase dispersée de l'émulsion ou/et de la dispersion, présente la composition suivante :
- huile : 5 à 75% en poids,
- agent tensioactif : 25 à 95 % en poids.

2. Procédé selon la revendication 1,
**caractérisé en ce que**
l'on applique comme huile une huile paraffinique ou une huile de colza, de préférence purifiée.

3. Procédé selon la revendication 1 ou 2,
**caractérisé en ce que**
l'on utilise comme agent tensioactif un savon hydrosoluble, de préférence au moins un sel d'un acide carboxylique, de préférence d'un acide gras, ayant une longueur de chaîne d'au moins 10 atomes de carbone.

4. Procédé selon l'une des revendications 1 à 3,
**caractérisé en ce que**
l'agent tensioactif contient un sel de l'acide stéarique ou/et de l'acide palmitique.

5. Procédé selon l'une des revendications 1 à 4,
**caractérisé en ce que**
l'agent tensioactif est prévu de telle sorte qu'il se décompose, de préférence presque entièrement, lors de l'application de l'agent anticorrosion sur la surface métallique phosphatée et du séchage subséquent.

6. Procédé selon l'une des revendications 1 à 5,
**caractérisé en ce que**
l'agent tensioactif contient une amine, de préférence monoéthanolamine, isopropanolamine ou/et triéthanolamine.

7. Procédé selon la revendication 5 ou 6,
**caractérisé en ce que**
la part active de l'agent anticorrosion présente la composition suivante :
- huile, de préférence huile de paraffine ou huile de colza purifiée : 50 à 75 % en poids, de préférence 60 à 70 % en poids,
- agent tensioactif : 25 à 50 % en poids,
- les composants de l'agent tensioactif présentant de préférence la composition suivante par rapport à la part active :
• acide palmitique ou/et acide stéarique : 15 à 65 % en poids, de préférence 20 à 40 % en poids, et
• amine, de préférence monoéthanolamine, isopropanolamine ou/et triéthanolamine : au moins 3 % en poids, de préférence au moins 4,5 % en poids, et/ou au plus 30 % en poids, de préférence au plus 20 % en poids.

8. Procédé selon la revendication 7,
**caractérisé en ce que**
la part active de l'agent anticorrosion est mélangée à la phase continue pour former un liquide anticorrosion, le liquide anticorrosion contenant de préférence de 0,25 à 5 % en poids, de manière particulièrement préférée de 0,5 à 3 % en poids, de la part active, le reste étant formé par la phase continue.

9. Procédé selon l'une des revendications 1 à 8,
**caractérisé en ce que**
l'agent anticorrosion est composé comme suit :
- phase continue, de préférence eau ou white spirit : 95 à 99,75 % en poids, de préférence 97 à 99,5 % en poids,
- huile, de préférence huile de paraffine ou huile de colza purifiée : 0,0125 à 3,75 % en poids, de préférence 0,125 à 3,75 % en poids, de manière particulièrement préférée 0,15 à 3,5 % en poids,
- agent tensioactif : 0,0625 à 4,75 % en poids, de préférence 0,0625 à 2,5 % en poids, de manière particulièrement préférée 0,075 à 2 % en poids,
- les composants de l'agent tensioactif mentionnés ci-après étant de préférence présents dans les proportions suivantes :
• acide palmitique ou acide stéarique : 0,0375 à 3,25 % en poids, de préférence 0,05 à 2 % en poids, de manière particulièrement préférée 0,625 à 2 % en poids,
• amine, de préférence monoéthanolamine, isopropanolamine ou/et triéthanolamine : au moins 0,0075 % en poids, de préférence au moins 0,01125 % en poids, et/ou au plus 1,5 % en poids, de préférence au plus 1 % en poids.

10. Procédé selon l'une des revendications 1 à 9,
**caractérisé en ce que**
l'agent anticorrosion, en particulier le liquide anticorrosion, est appliqué sur la surface du fil, de préférence par immersion du fil dans le liquide anticorrosion ou par pulvérisation ou vaporisation du liquide anticorrosion sur le fil.

11. Procédé selon l'une des revendications 1 à 10,
**caractérisé en ce que**
le fil est déformé après avoir été recouvert de l'agent anticorrosion, de préférence par déformation à froid.

12. Procédé selon l'une des revendications 1 à 11,
**caractérisé en ce que**
l'agent anticorrosion contient de la cire.

13. Fil, en particulier fil d'acier, phosphaté dont la surface est recouverte d'un agent anticorrosion qui contient une huile, un film de l'agent anticorrosion étant disposé sur la surface du fil, qui contient l'huile et en outre au moins un acide carboxylique, l'agent anticorrosion étant une émulsion ou/et une dispersion qui contient un agent tensioactif et une huile comme phase dispersée,
**caractérisé en ce que**
une part active de l'agent anticorrosion, qui comprend une phase dispersée de l'émulsion ou/et de la dispersion, présente la composition suivante :
- huile : 5 à 75% en poids,
- agent tensioactif : 25 à 95 % en poids.

14. Fil selon la revendication 13,
**caractérisé en ce que**
le film contient du stéarate de zinc et/ou du stéarate de calcium.

15. Fil selon la revendication 13 ou 14,
**caractérisé en ce que**
le film recouvre le fil avec 0,1 à 1,5 g/m² de surface, de préférence avec au moins 0,2 à 0,8 g/m² de surface.
